# EUROPÄISCHE PATENTSCHRIFT

(11) **EP 1 034 206 B1**
(45) Veröffentlichungstag und Bekanntmachung des Hinweises auf die Patenterteilung: **12.11.2003**
(21) Anmeldenummer: 99946110.6
(22) Anmeldetag: 03.09.1999
(51) Int. Cl.: C08G 59/18, C08G 59/40, C08G 71/04, C09D 163/00

(54) **WÄSSRIGE BESCHICHTUNGSMITTEL AUF EPOXID/AMIN-BASIS UND IHRE VERWENDUNG BEI MEHRSCHICHTLACKIERUNGEN**
EPOXIDE/AMINE BASED AQUEOUS COATING AGENTS AND USE THEREOF IN MULTICOAT LACQUERS
AGENTS DE RECOUVREMENT AQUEUX A BASE D'EPOXYDE/AMINE ET LEUR UTILISATION DANS LES PEINTURES MULTICOUCHES

(30) Priorität: 24.09.1998 DE 19843835
(43) Veröffentlichungstag der Anmeldung: 13.09.2000
(73) Patentinhaber: E.I. DU PONT DE NEMOURS & COMPANY INCORPORATED, Wilmington, Delaware 19898 (US)
(72) Erfinder: BEYERS, Heike, D-42369 Wuppertal (DE); MAAG, Karin, D-79594 Inzlingen (DE); VOGT-BIRNBRICH, Bettina, D-42719 Solingen (DE)
(74) Vertreter: Gille Hrabal Struck Neidlein Prop Roos
(86) Internationale Anmeldenummer: EP9906484
(87) Internationale Veröffentlichungsnummer: WO00017251

(56) Entgegenhaltungen:
- EP-A- 0 661 355
- EP-A- 0 735 070
- WO-A-96/06876
- WO-A-97/49749
- DE-A- 4 344 510

## Beschreibung

Die Erfindung betrifft zweikomponentige Überzugsmittel auf Basis wäßriger Epoxid/Amin-Systeme mit modifizierten Epoxidkomponenten. Die Erfindung betrifft auch die Verwendung der Überzugsmittel als Füller und/oder Grundierung in der Mehrschichtlackierung, insbesondere auf dem Gebiet der Fahrzeug- und Fahrzeugteilelackierung.

Aufgrund immer strenger werdender Umweltschutzauflagen gewinnen wäßrige Systeme zur Beschichtung von Gegenständen zunehmend an Bedeutung. Sie müssen sich in ihren Eigenschaften an konventionellen, d.h. lösemittelhaltigen Systemen messen lassen. Wasserverdünnbare Epoxidharzsysteme haben zunehmend unter den bei Raumtemperatur härtbaren Beschichtungsmitteln an Bedeutung gewonnen. Diese zweikomponentigen (2K) Systeme zeichnen sich durch eine Vielzahl guter Eigenschaften aus, wie z.B. kein oder nur geringer Lösemittelanteil, gute Trocknung und schnelle Durchhärtung, gute Zwischenschichthaftung und guter Korrosionsschutz bei Metallen.

Es sind bereits verschiedene wäßrige Epoxid/Amin-Systeme auf unterschiedlicher Bindemittelbasis beschrieben worden. In der DE-A-36 43 751 werden beispielsweise nicht-ionisch stabilisierte wäßrige Epoxidharzdispersionen beschrieben. Diese basieren auf Kondensationsprodukten aus Epoxidverbindungen, aromatischen Polyolen und Kondensationsprodukten aus Epoxidverbindungen und aliphatischen Polyolen. In den EP-A-0 387 418, DE-A-43 44 510 und DE-A-196 25 345 werden verschiedene Aminhärter für wäßrige Epoxid-Systeme auf Basis von speziellen Epoxid/Amin-Addukten und auf Basis von Aminourethanen, die mit verschiedenen nicht-ionischen Emulgatoren umgesetzt wurden, beschrieben. In der DE-A-41 23 860 werden übliche wäßrige Epoxid/Amin-Systeme genannt, die zusätzlich ein nicht-ionisches Polyurethanharz enthalten.

Desweiteren werden in der US-A-4,399,242 wäßrige Epoxidharzdispersionen beschrieben aus 50 bis 70 Gew.-% eines selbstemulgierenden Epoxidharzes, 1 bis 25 Gew.-% eines nicht mit Wasser mischbaren aliphatischen Monoepoxids als Reaktivverdünner und 5 bis 20 Gew.-% eines Glykols oder Glykolethers. Bei dem selbstemulgierenden Epoxidharz handelt es sich um ein Reaktionsprodukt aus 40 bis 90 Gew.-% eines Diglycidylethers eines zweiwertigen Phenols, 5 bis 35 Gew.-% eines zweiwertigen Phenols und 2 bis 15 Gew.-% eines Diglycidylethers eines Polyoxyalkylenglykols mit 2 bis 6 Gew.-% eines Diisocyanates. Es kann mit einem Polyamin vernetzt werden.

Nachteilig an den bekannten wäßrigen Epoxid/Amin-Systemen ist, daß daraus hergestellte Überzugsmittel eine ungenügende Schleifbarkeit, insbesondere eine ungenügende Trockenschleifbarkeit aufweisen. Einerseits sind die erhaltenen Überzüge so hart, daß beim Schleifen ein genügend großer Abtrag nur unter großem zeitlichen Aufwand möglich ist oder ist mitunter überhaupt kein Schleifen möglich und es erfolgt nur ein Zerkratzen der Oberfläche. Andererseits gibt es wäßrige Epoxid/Amin-Systeme, die durch ihre ausgeprägte Thermoplastizität beim Schleifen rasch erweichen und in kurzer Zeit ein Zusetzen des Schleifpapiers bewirken.

Weiterhin nachteilig bei den meisten bekannten wäßrigen Epoxid/Aminsystemen ist, daß sie sich, insbesondere in höheren Schichtdicken von beispielsweise 140 µm, nicht blasenfrei applizieren lassen und auch nach Trocknung bei höheren Temperaturen von beispielsweise 40 bis 60°C Blasenbildung in der Beschichtung aufweisen. Insbesondere bei den in DE-A-43 44 510 und DE-A-196 25 345 beschriebenen Aminhärtern für wäßrige Epoxidharze können herstellungsbedingte Schwankungen in der Bindemittelqualität auftreten, was sich negativ auf das Eigenschaftsprofil des fertigen Lackes bzw. der resultierenden Beschichtung auswirkt.

Aufgabe der Erfindung war es daher wäßrige zweikomponentige Beschichtungsmittel bereitzustellen, die eine ausreichende Verarbeitungszeit aufweisen, die sich blasenfrei auch in höheren Schichtdicken applizieren lassen und Überzüge mit störungsfreien Oberflächen ergeben. Die Überzüge sollen sowohl im nassen als auch insbesondere im trockenen Zustand sehr gut schleifbar sein und insbesondere nach Belastung im Feucht/Warm-Test keine Enthaftungs- und Unterwanderungserscheinungen zum Untergrund aufweisen. Herstellungsbedingte Schwankungen in der Bindemittelqualität der Aminhärter sollen sich nicht negativ auf das Eigenschaftsprofil der Lacke bzw. der daraus erhaltenen Beschichtungen auswirken. Die Beschichtungsmittel sollen eine ausreichende Topfzeit aufweisen. Die Beschichtungsmittel sollen beispielsweise zur Herstellung von Füllerschichten in der Mehrschichtlackierung geeignet sein.

Die Aufgabe wird gelöst durch zweikomponentige wäßrige Beschichtungsmittel, enthaltend
A) als Aminkomponente ein oder mehrere Aminourethane A1), die erhältlich sind durch Umsetzung von
   a) Verbindungen mit mindestens einer cyclischen Carbonatgruppe, insbesondere einer 2-Oxo-1,3-dioxolan-Gruppe und/oder 2-Oxo-1,3-dioxan-Gruppe, mit
   b) einem oder mehreren Aminen mit mindestens einer primären Aminogruppe, wobei das Verhältnis der Anzahl der cyclischen Carbonatgruppen zu der Anzahl der primären Aminogruppen 1 : 10 bis 1 : 1,1 beträgt,
   und die gegegebenenfalls umgesetzt werden können mit
   einer oder mehreren hydrophilen wasserverdünnbaren Epoxidverbindungen A2), wobei das Verhältnis der Anzahl aller Aminwasserstoffatome von A1) zu den Epoxidgruppen von A2) bevorzugt 2 : 1 bis 20 : 1 beträgt,
   und
B) als Epoxidkomponente ein oder mehrere urethangruppenhaltige
   Epoxidverbindungen, welche erhältlich sind durch Reaktion einer oder mehrerer Epoxidverbindungen c) mit einem oder mehreren Polyisocyanaten d), wobei die Polyisocyanate in einer Menge von 0,1 bis 50 Gew.-%, bevorzugt 0,5 bis 25 Gew.-%, besonders bevorzugt 2 bis 15 Gew.-%, bezogen auf die Menge der Epoxidverbindung (fest auf fest) eingesetzt werden.

Eine bevorzugte Ausgestaltungsform der Erfindung besteht darin, die Aminourethane A1) mit hydrophilen nicht-ionischen Epoxidverbindungen A2) umzusetzen, um so eine verbesserte Wasserverdünnbarkeit und stabile Dispergierung des Aminhärters zu gewährleisten.

Überraschend wurde gefunden, daß mit den erfindungsgemäßen Beschichtungsmitteln herstellungsbedingte Qualitätsschwankungen der Aminkomponente gut ausgeglichen werden können, so daß im fertigen Lack und den resultierenden Beschichtungen kein negativer Einfluß auf das Eigenschaftsprofil mehr festgestellt werden kann.

Im folgenden sollen die Aminkomponente A) und die Epoxidkomponente B) genauer beschrieben werden.

Bei der Aminkomponente A) handelt es sich um Aminourethane A1), die erhalten werden durch Umsetzung von Verbindungen mit mindestens einer cyclischen Carbonatgruppe (a) mit einem oder mehreren Aminen mit mindestens einer primären Aminogruppe (b).

Die zur Herstellung der Aminourethane A1) als Komponente a) einsetzbaren cyclische Carbonatgruppen enthaltenden Verbindungen sind insbesondere solche, die eine, vorzugsweise zwei oder mehrere 2-Oxo-1,3-dioxolan- oder 2-Oxo-1,3-dioxan-Gruppen enthalten, wobei diese bevorzugt endständig sind. Bei der Komponente b) handelt es sich um Amine, welche mindestens eine primäre, vorzugsweise mehrere primäre und gegebenenfalls noch sekundäre und tertiäre Aminogruppen enthalten.

Zur Herstellung der Aminourethane A1) können als Komponente a) die üblichen cyclischen Carbonate eingesetzt werden, welche beispielsweise durch Umsetzung von Kohlendioxid mit Epoxidverbindungen nach bekannter Art und Weise herstellbar sind. Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 100 und 2000, insbesondere zwischen 100 und 350. Die Epoxidverbindungen können einzeln oder im Gemisch eingesetzt werden.

Als Komponente a) können weiterhin die üblichen cyclischen Carbonate eingesetzt werden, welche beispielsweise durch Umsetzung von Kohlensäureestern, wie z.B. Dimethylcarbonat, Diethylcarbonat, Diphenylcarbonat, Ethylencarbonat oder Propylencarbonat mit Polyolen erhalten werden, wobei die Polyole mindestens vier Hydroxylgruppen tragen, von denen je zwei mit Kohlensäureestern in einer Umesterung zu cyclischen Fünfring- oder Sechsring-Carbonaten reagieren. Als mehrwertige Polyole sind beispielsweise zu nennen: Diglycerin, Triglycerin, Polyglycerin, Zuckeralkohole (z.B. Xylit, Mannit, Erythrit), Di- und Trimethylolpropan, Di- und Trimethylolethan, Pentaerythrit und Dipentaerythrit. Diglycerin ist hierbei besonders bevorzugt.

Die Herstellung der cyclischen Carbonate aus den Polyolen geschieht in dem Fachmann geläufiger Weise, insbesondere durch Umsetzung der Polyole mit den Kohlensäureestern im stöchiometrischen Verhältnis 1,0 : 1,0 bis 1,0 : 10,0 (Verhältnis von 1,2- oder 1,3-Glykolgruppen zu Carbonatgruppen), insbesondere unter Katalyse. Als Katalysatoren kommen beispielsweise basische Katalysatoren, wie z.B.: Carbonate, Bicarbonate, Alkoholate, Carboxylate, Hydroxide oder Oxide der Alkali- und Erdalkalimetalle in Frage, wie auch Lewis-Säure Substanzen, wie z.B. organische Verbindungen des zwei- oder vierwertigen Zinns oder Titans, z.B. Zinn-(II)-octoat, Zinn-(II)-laureat, Dibutylzinnoxid oder Titantetrabutylat. Die Katalysatoren können beispielsweise in einer Menge von 0,01 bis 1,0 Gew.-% bezogen auf Polyol und Kohlensäureester zugesetzt werden.

Bei der Herstellung der Aminourethane A1) können als Amin-Komponente b) Amine, vorzugsweise Polyamine eingesetzt werden, welche zur Reaktion mit den Carbonatgruppen von a) befähigte primäre Aminogruppen enthalten. Es kann sich dabei beispielsweise um Polyamine, Amin-Epoxid-Addukte und/oder modifizierte Derivate hiervon handeln.

Als Beispiele für Polyamine sind zu nennen aliphatische Polyalkylenamine, wie Diethylentriamin, Triethylentetramin, Tetraethylenpentamin, Pentaethylenhexamin, Propylendiamin, Dipropylentriamin, ferner 2,2,4- und/oder 2,4,4-Trimethylhexamethylendiamin, Bis-(3-aminopropyl)-amin, 1,4-Bis-(3'-aminopropyl)-piperazin, N,N-Bis(3-aminopropyl)ethylendiamin, Neopentandiamin, 2-Methyl-1,5-pentandiamin, 1,3-Diaminopentan, Hexamethylendiamin, sowie cycloaliphatische Amine wie 1,2- bzw. 1,3-Diaminocyclohexan, 1,4-Diamino-3,6-diethylcyclohexan, 1,2-Diamino-4-ethylcyclohexan, 1,4-Diamino-3,6-diethylcyclohexan, 1-Cyclohexyl-3,4-diaminocyclohexan, Isophorondiamin und Umsetzungsprodukte davon, 4,4'-Diaminodicyclohexylmethan und -propan, 2,2-Bis-(4-aminocyclohexyl)-methan und -propan, 3,3'-Dimethyl-4,4'-diaminodicyclohexylmethan, 3-Amino-1-cyclohexylaminopropan, 1,3- und 1,4-Bis-(aminomethyl)-cyclohexan.

Geeignet sind auch araliphatische Amine, insbesondere solche, bei denen aliphatische Aminogruppen vorhanden sind, z.B.meta- und para-Xylylendiamin.

Als Amin-Epoxid-Addukte kommen beispielsweise Umsetzungsprodukte von Polyaminen, wie z.B. Ethylendiamin, Propylendiamin, Hexamethylendiamin, 2,2,4-und 2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidylethern wie Phenylglycidylether, tert.-Butylglycidylether, Ethylhexylglycidylether, Butylglycidylether oder mit Glycidylestern, wie beispielsweise dem Glycidylester der Versaticsäure oder mit Polyglycidylethern und -estern in Betracht.

Die Amine können allein oder als Gemische verwendet werden. Ihre Auswahl sollte so erfolgen, daß sie mindestens eine, vorzugsweise jedoch mehr als eine freie primäre Aminogruppe enthalten.

Die Umsetzung der Komponenten a) und b) erfolgt im allgemeinen in den erforderlichen stöchiometrischen Verhältnissen nach üblichen Methoden, beispielsweise bei erhöhten Temperaturen, gegebenenfalls unter Verwendung inerter Lösemittel. Die Umsetzung in Gegenwart von gegenüber der Cyclocarbonatgruppe inerten Lösungsmitteln stellt eine bevorzugte Verfahrensvariante dar. Bei der stöchiometrischen Bewertung der Ausgangsprodukte sowie auch der Endprodukte und zur Reaktionskontrolle werden die Aminzahl (Titration mit Perchlorsäure) und die Cyclocarbonat-Äquivalenzzahl (Titration mit Kaliumhydroxydlösung) zugrunde gelegt. Bei der Umsetzung der Komponenten (a) und (b) können die Aminverbindungen einzeln oder als Gemische, gleichzeitig oder zeitlich hintereinander der Reaktion zugeführt werden, gegegebenfalls gelöst in inerten Lösemitteln.

Die Umsetzung wird unter Reaktions- und Verfahrensbedingungen durchgeführt, unter denen die Cyclocarbonatgruppen der Komponente a) nur mit den primären Aminogruppen der Komponente b) reagieren können, was nach dem Fachmann geläufigen Methoden erreichbar ist, ohne daß auch entsprechende Reaktionen mit den eventuell vorhandenen sekundären Aminogruppen stattfinden, welche deutlich reaktionsträger sind.

Als inerte Lösemittel kommen z.B. aromatische Kohlenwasserstoffe wie Xylol und Toluol, Alkohole wie Methanol, Ethanol, Butanole, Pentanole, 1,2-Propandiol, Ethylenglykol und Glykoläther wie Methoxyethanol, Ethoxyethanol, Methoxypropanol, Butoxyethanol, Methoxybutanol, Glykoldimethyläther und Diglykoldimethyläther usw. in Frage.

Die gewählten Mengenverhältnisse (a) : (b) werden so gewählt, daß aminofunktionelle Reaktionsprodukte (A1) gebildet werden. Vorzugsweise sollen im Reaktionsprodukt mindestens eine primäre, bevorzugt mehrere primäre Aminogruppen pro Molekül vorliegen. Durch Variation der Mengenverhältnisse lassen sich Produkte von oligomerem bis hin zu polymerem Charakter gewinnen, wobei Oligomere besonders bevorzugt sind. Somit werden die Mengenverhältnisse von cyclischem Carbonat a) und Polyamin b) bevorzugt so gewählt, daß das Verhältnis der Anzahl der cyclischen Carbonatgruppen zur Anzahl der primären Aminogruppen bei 1,0 : 5,0 bis 1,0 : 1,5 liegt.

Bevorzugt werden die Aminourethane A1) über ihre Aminogruppen mit hydrophilen, bevorzugt nicht-ionischen Epoxidverbindungen A2) umgesetzt, wobei das Verhältnis der Anzahl aller Aminwasserstoffatome zur Anzahl der Epoxidgruppen bevorzugt 2 : 1 bis 20 : 1, besonders bevorzugt 2 : 1 bis 5 : 1 beträgt.

Als zur Umsetzung mit den Aminourethanen A1) geeignete hydrophile Epoxidverbindungen A2) kommen z.B. Kondensationsprodukte aus üblichen Polyepoxiden und Polyetherpolyolen mit einer gewichtsmittleren Molmasse (Mw) von beispielsweise 600 bis 12000, bevorzugt von 2000 bis 8000, in Frage. Es können z.B. die hydrophilen Epoxidverbindungen verwendet werden, wie sie z.B. in der EP-A-000 605 und der DE-A-43 09 639 ausführlich beschrieben sind. Umsetzungsprodukte der vorstehend beschriebenen Aminourethane A1) mit den hydrophilen Epoxidverbindungen A2) sind ausführlich beschrieben in der DE-A-43 44 487 und können z.B. ebenfalls eingesetzt werden.

Bevorzugt werden als zur Umsetzung mit den Aminourethanen A1) geeignete hydrophile Epoxidverbindungen A2) Reaktionsprodukte aus
e) einem oder mehreren Polyalkylenpolyethern mit mindestens einer primären und/oder sekundären alpha-ständigen Aminogruppe und mindestens einer omega-ständigen Alkylether- oder Arylethergruppe und/oder einem oder mehreren Polyalkylenpolyethern mit zwei primären und/oder sekundären alpha, omega-ständigen Aminogruppen, jeweils mit einer gewichtsmittleren Molmasse (Mw) von 200 bis 20000 und
f) einer oder mehreren Epoxidverbindungen mit mindestens 2 Epoxidgruppen pro Molekül und einem Epoxidäquivalentgewicht von 100 bis 2000 eingesetzt.

Das Verhältnis der Anzahl der primären und/oder sekundären Aminogruppen der Komponente e) zu den Epoxidgruppen der Komponente f) beträgt dabei 1 : 2 bis 1 : 20, vorzugsweise 1 : 4 bis 1 : 8 und das Epoxidäquivalentgewicht der aus e) und f) erhaltenen Kondensationsprodukte liegt beispielsweise zwischen 150 und 8000, bevorzugt bei 250 bis 1000.

Zur Herstellung der hydrophilen Epoxidverbindungen A2) geeignete Komponenten e) sind Polyalkylenpolyether mit endständiger sekundärer oder primärer Aminogruppe und endständiger Alkyl- oder Arylethergruppe und/oder Polyalkylenpolyether mit endständigen sekundären oder primären Aminogruppen. Die Polyalkylenpolyetheramine haben bevorzugt eine gewichtsmittlere Molmasse (Mw) von 200 bis 20000. Die Basis der Polyalkylenpolyethereinheiten können beispielsweise Ethyl-, Propyl- und Butyleinheiten sein. Es kann sich hierbei beispielsweise um Reaktionsprodukte von Ethylenoxid, Propylenoxid, Butylenoxid bzw. Amylenoxid mit einwertigen und/oder mehrwertigen Alkoholen oder um Polyether auf der Basis von Tetrahydrofuran handeln. Bevorzugt sind Polyalkylenpolyetheramine auf Basis von Ehylenoxid oder Propylenoxid. Besonders bevorzugt sind Polyalkylenpolyethermonoamine.

Beispielsweise können als Komponente e) solche Produkte eingesetzt werden, wie sie unter dem Handelsnamen Jeffamine® von der Firma Huntsman Corporation Belgium N.V. vertrieben werden.

Zur Herstellung der hydrophilen Epoxidverbindungen A2) geeignete Polyepoxidverbindungen f) sind beispielsweise solche, wie sie vorstehend zur Herstellung der cyclischen Carbonate a) beschrieben wurden. Aus der großen Zahl einsetzbarer polyfunktioneller Epoxidverbindungen seinen beispielhaft genannt: die Epoxide mehrfach ungesättigter Kohlenwasserstoffe (z.B. Vinylcyclohexan, Dicyclopentadien, Cyclohexadien, Butadien), Epoxidether mehrwertiger Alkohole (z.B. Ethylen-, Propylen-, Butylenglykole, Glycerin, Pentaerythrit, Sorbit, Polyvinylalkohol), Epoxidether mehrwertiger Phenole (z.B. Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, 1,1-Bis-(4-hydroxyphenyl)-ethan, 2,2-Bis-(4-hydroxy-3-methylphenyl)-propan, 2,2-Bis-(4-hydroxy-3-chlorphenyl)-propan, 2,2-Bis-(4-hydroxy-3,5- dichlorphenyl)propan, 1,1-Bis-(4-hydroxyphenyl)-cyclohexan, Bis-(4-hydroxyphenyl)-cyclohexylmethan, sowie Epoxide, welche nach üblichen Verfahren aus mehrfach ungesättigten Carbonsäuren oder einfach ungesättigten Carbonsäureestern ungesättigter Alkohole hergestellt worden sind.

Bevorzugt eingesetzte Epoxidverbindungen sind Polyphenol-Glycidylether, z.B. die Reaktionsprodukte aus Epichlorhydrin und Bisphenol A oder Bisphenol F. Derartige Epoxidharze haben beispielsweise ein Epoxid-Äquivalent von 160 bis 500. Es können auch Gemische entsprechender Epoxidverbindungen eingesetzt werden.

Die Aminourethane A1) werden somit als bevorzugte Ausführungsform mit den hydrophilen Epoxidverbindungen A2) umgesetzt. Die Aminourethane können dabei in Abmischung mit weiteren Aminverbindungen, bevorzugt Polyaminen, die mindestens eine primäre und gegebenenfalls noch sekundäre oder tertiäre Aminogruppen enthalten, mit den hydrophilen Epoxidverbindungen umgesetzt werden. Als weitere Aminverbindungen sind beispielsweise sämtliche Amine geeignet, wie sie vorstehend für Komponente b) genannt wurden.

Die Herstellung der Addukte aus Aminourethanen A1), gegebenenfalls weiteren Aminverbindungen und hydrophilen Epoxidverbindungen A2) unterliegt keinen besonderen Regeln. Bevorzugte Herstellungsvarianten sind in der DE-A-196 25 345, auf die hier ausdrücklich Bezug genommen wird, ausführlich beschrieben.

Die Aminourethane A1) bzw. die vorstehend beschriebenen bevorzugten Epoxid-Aminourethan-Addukte (Umsetzungsprodukte aus A1) und A2) können als alleinige Härter oder im Gemisch mit weiteren Aminhärtern verwendet werden.

Beispiele für weitere Aminhärter sind alle unter b) genannten Amine, bevorzugt Polyamine, Epoxid-Amin-Addukte, Mannichbasen und Polyamidoamine, welche allein oder als Gemische verwendet werden können. Geeignete Mannich-Basen werden durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd, und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 2,2-Bis(4'-hydroxyphenyl)-propan, vorzugsweise aber Phenol hergestellt. Als araliphatische Amine können insbesondere solche eingesetzt werden, bei denen aliphatische Aminogruppen vorhanden sind, z.B. meta- und para-Xylylendiamin. Polyamidoamine, die ebenfalls als Härter verwendet werden können, werden beispielsweise durch Umsetzung von Polyaminen mit Mono- oder Polycarbonsäuren, z.B. dimerisierten Fettsäuren, erhalten.

Neben den oben genannten Systemen können als Aminhärter wasserlösliche Polyalkylenpolyetherdi- und -polyamine eingesetzt werden. Die Polyalkylenpolyetherdi- und -polyamine haben bevorzugt eine gewichtsmittlere Molmasse (Mw) von 200 bis 20000 g/mol. Die Basis der Polyalkylenpolyethereinheiten können beispielsweise Ethyl-, Propyl- und Butyleinheiten sein. Es kann sich hierbei beispielsweise um Reaktionsprodukte von Ethylenoxid, Propylenoxid, Butylenoxid bzw. Amylenoxid mit einwertigen und/oder mehrwertigen Alkoholen oder um Polyether auf der Basis von Tetrahydrofuran handeln.

Bei der Epoxidkomponente B) handelt es sich um ein oder mehrere urethangruppenhaltige Epoxidverbindungen, bei denen es sich um Reaktionsprodukte aus Epoxidverbindungen c) und Polyisocyanaten d) handelt. Das Äquivalentverhältnis der Hydroxylgruppen der Epoxidverbindungen c) zu den Isocyanatgruppen von Komponente d) beträgt dabei maximal 1 : 1, bevorzugt 1 : 0,01 bis 1 : 1, besonders bevorzugt 1 : 0,05 bis 1 : 1.

Als Epoxidverbindungen c) zur Herstellung der Epoxidkomponente B) sind die bekannten für wäßrige Systeme einsetzbaren Epoxidharze geeignet. Bei den Epoxidharzen kann es sich beispielsweise um solche Epoxidverbindungen handeln, wie sie bereits für Komponente f) beschrieben wurden. Gut geeignet sind beispielsweise modifizierte nicht-ionisch stabilisierte Epoxidharze, wie sie in der DE-A-36 43 751 beschrieben sind. Weiterhin ist der Einsatz beliebiger Epoxidharze, wie sie dem Fachmann für wäßrige zweikomponentige Epoxid/Amin-Systeme geläufig sind, möglich. Das können handelsübliche Di- oder Polyepoxide sein. Das sind filmbildende Epoxidharze, die als wäßrige Dispersion oder als wasserverdünnbares Harz vorliegen. Beispiele für solche Polyepoxide sind Polyglycidylether auf Basis von aliphatischen oder aromatischen Diolen wie Bisphenol A, Bisphenol F oder Polyalkylenglykol.

Zur Herstellung der Epoxidkomponente B) werden die Epoxidverbindungen c) mit Polyisocyanaten d) umgesetzt. Die Umsetzung erfolgt dabei unter vollständigem Verbrauch der Isocyanatgruppen, d.h. die Polyisocyanatkomponente wird, bezogen auf die Hydroxylgruppen der Epoxidverbindungen c), im Unterschuß eingesetzt oder maximal in einer solchen Menge, daß alle Hydroxylgruppen der Komponente c) umgesetzt werden.

Als Polyisocyanatkomponente d) kommen beliebige organische Polyisocyanate mit aliphatisch, cycloaliphatisch, araliphatisch und/oder aromatisch gebundenen freien Isocyanatgruppen in Frage.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Beispiele für geeignete Diisocyanate sind Trimethylendiisocyanat, Tetramethylendiisocyanat, Pentamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylen-diisocyanat, 2,6-Toluylen-diisocyanat, Bis-(4-isocyanato-phenyl)-methan, Norbonendiisocyanat, 4,4-Diisocyanato-diphenylether, 2,3-Bis-(8-isocyanatooctyl)-4-octyl-5-hexylcyclohexan,3-Isocyanatomethyl-1-methylcyclohexylisocyanat, und/oder 2,6-Diisocyanatomethylcapronat.

Gut geeignet sind beispielsweise auch sogenannte "Lackpolyisocyanate" auf Basis von Hexamethylendiisocyanat, 1-Isocyanato-3,3,5-trimethyl-5-isocyanatomethylcyclohexan (IPDI) und/oder Bis(isocyanatocyclohexyl)-methan und die an sich bekannten Biuret-, Allophanat-, Urethan- und/oder Isocyanuratgruppen aufweisenden Derivate dieser Diisocyanate. Es können auch Triisocyanate, wie z.B. Nonantriisocyanat, eingesetzt werden. Ebenfalls geeignet sind auch sterisch gehinderte Polyisocyanate. Beispiele hierfür sind 1,1,6,6-Tetramethylhexamethylendiisocyanat, 1,5-Dibutylpentamethyldiisocyanat, p- oder m-Tetramethylxylylendiisocyanat und die entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Wasser oder Trimethylolpropan.

Die Polyisocyanate können einzeln oder im Gemisch eingesetzt werden.

Die erfindungsgemäßen Beschichtungsmittel können Pigmente und/oder Füllstoffe enthalten. Bei den Pigmenten kann es sich um farb- und/oder effektgebende Pigmente handeln. Als farbgebende Pigmente sind alle lacküblichen Pigmente organischer oder anorganischer Natur geeignet.

Beispiele für anorganische oder organische farbgebende Pigmente sind Titandioxid, mikronisiertes Titandioxid, Eisenoxidpigmente, Ruß, Azopigmente, Phthalocyaninpigmente, Chinacridon- oder Pyrrolopyrrolpigmente. Beispiele für effektgebende Pigmente, die jedoch für Füllerformulierungen nicht typisch sind, sind Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente. Es können auch Korrosionsschutzpigmente, wie z.B. Zinkphosphat, enthalten sein.

Ebenso können in den Beschichtungsmitteln Füllstoffe enthalten sein. Es handelt sich dabei um die üblichen in der Lackindustrie einsetzbaren Füllstoffe. Beispiele für Füllstoffe sind Siliciumdioxid, Aluminiumsilikat, Bariumsulfat, Calziumcarbonat und Talkum.

Die erfindungsgemäßen Beschichtungsmittel können weiterhin Wasser sowie geringe Mengen an organischen Lösemitteln enthalten.

Bei den in den Beschichtungsmitteln gegebenenfalls vorhandenen organischen Lösemitteln handelt es sich um übliche lacktechnische Lösemittel. Diese können aus der Herstellung der Bindemittel stammen oder werden separat zugegeben. Bevorzugt sind es wassermischbare Lösemittel. Beispiele für geeignete Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere, N-Methylpyrrolidon sowie Ketone, z.B. Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe. Anteilmäßig liegen die organischen Lösemittel beispielsweise maximal bis zu 10 bis 15 Gew.-%, bezogen auf das gesamte Beschichtungsmittel, vor.

Die erfindungsgemäßen Beschichtungsmittel können desweiteren lackübliche Additive enthalten. Beispiele für lackübliche Additive sind Verlaufsmittel, rheologiebeeinflussende Mittel, wie hochdisperse Kieselsäure oder polymere Harnstoffverbindungen, Verdicker, wie anvernetzte Polycarbonsäure oder Polyurethane, Entschäumer, Netzmittel, Antikratermittel, Haftvermittler und Härtungsbeschleuniger. Die Additive werden in üblichen, dem Fachmann bekannten Mengen eingesetzt.

Die erfindungsgemäßen Beschichtungsmittel können in üblicher Weise hergestellt werden. So können die Pigmente und/oder Füllstoffe entweder in der Epoxidharzkomponente oder in der Aminkomponente dispergiert werden. Bevorzugt ist die Dispergierung in der Aminkomponente. Es ist jedoch auch möglich, die Dispergierung mit einem zusätzlichen Netzharz durchzuführen. Da es sich um zweikomponentige Beschichtungsmittel handelt, werden die miteinander reaktiven Bindemittelkomponenten A) und B) getrennt voneinander gelagert und können kurz vor der Applikation miteinander vermischt werden. Das Äquivalentverhältnis Aminogruppen zu Epoxidgruppen kann dabei beispielsweise 5 : 1 bis 1 : 5, bevorzugt 1,5 : 1 bis 1 : 1,5, betragen.

Generell kann vor der Applikation bei Bedarf mit Wasser oder organischen Lösemitteln noch auf Spritzviskosität eingestellt werden.

Die erfindungsgemäßen Überzugsmittel sind besonders geeignet zur Herstellung von Füller- und/oder Grundierungsschichten eines lufttrocknenden oder forcierttrocknenden Mehrschichtüberzuges. Sie können jedoch auch bei höheren Temperaturen von z.B. 80 bis 140°C gehärtet werden. Bevorzugt sind jedoch Temperaturen unter 80°C. Sie eignen sich für die Fahrzeug- und Industrielackierung, insbesondere für die Reparaturlackierung von Fahrzeugen und Fahrzeugteilen.

Die Erfindung betrifft daher auch die Verwendung der Beschichtungsmittel zur Herstellung von Mehrschichtüberzügen, wobei insbesondere die Füller- und/oder Grundierungsschichten von Mehrschichtüberzügen durch die erfindungsgemäßen Beschichtungsmittel erstellt werden.

Bevorzugtes Anwendungsgebiet der erfindungsgemäßen Beschichtungsmittel ist die Fahrzeug- und Fahrzeugteilelackierung. Die Beschichtungsmittel sind, je nach Härtungsbedingungen, sowohl für die Fahrzeugreparaturlackierung (Härtungstemperaturen von beispielsweise 20 bis 80°C) als auch die Fahrzeugserienlackierung (Härtungstemperaturen von beispielsweise 100 bis 140°C) anwendbar. Andere industrielle Anwendungen sind jedoch auch möglich.

Die Applikation der Beschichtungsmittel erfolgt nach üblichen Methoden, bevorzugt mittels Spritzapplikation.
Als Substrate sind Metall- und Kunststoffsubstrate, insbesondere die in der Automobilindustrie bekannten Substrate, geeignet, wie z.B. Eisen, Zink, Aluminium, Magnesium, Edelstahl oder deren Legierungen, sowie Polyurethane, Polycarbonate oder Polyolefine. Die Füllerschichten können auf gegebenenfalls vorbehandelte Substrate als solche oder auf übliche Grundierungen aufgebracht werden. Sie haften gut auf den verschiedensten Untergründen wie z.B. blankes Stahlblech, geschliffen, Polyvinylbutyralprimer, 2K-Epoxid-Grundierungen, angeschliffenen Werks- oder Altlackierungen. Die erfindungsgemäßen Beschichtungsmittel zeigen insbesondere als Grundierfüller, insbesondere auf Stahloberflächen, hervorragende Korrosionsschutzeigenschaften. Nach dem Trocknen und gegebenenfalls Schleifen können die erfindungsgemäßen Beschichtungsmittel problemlos mit üblichen Decklacken überlackiert weren. Dabei kann es sich um Einschichtdecklacke, z.B. auf 2K-Acrylat/Polyisocyanat-Basis oder um übliche Basecoat/Clearcoat-Aufbauten handeln. Es kann mit lösemittelbasierenden oder wasserbasierenden Beschichtungsmitteln überlackiert werden. Die erfindungsgemäßen Beschichtungsmittel können beipielsweise über längere Zeit, z.B. innerhalb von 18 Stunden (über Nacht), bei Raumtemperatur getrocknet werden. Sie können jedoch auch, gegebenenfalls nach einer Ablüftzeit von beispielsweise etwa 10 bis 30 Minuten, einer Trocknung bei höheren Temperaturen, beispielsweise während 20 bis 60 Minuten bei z.B. 40 bis 60°C, unterzogen werden.

Die erfindungsgemäßen Überzugsmittel lassen sich auch bei höheren Schichtdicken von beispielsweise 100 bis 140 µm blasenfrei applizieren. Nach dem Vernetzen erhält man homogen beschichtete Substrate mit glatten störungsfreien Oberflächen. Die Beschichtungen zeigen keine Nadelstiche. Die erfindungsgemäßen Beschichtungsmittel zeigen im Vergleich zu bekannten wäßrigen Epoxid/Polyamin-Systemen eine ausgezeichnete Schleifbarkeit. Schon nach kurzer Trockenzeit sind die Beschichtungen problemlos naß und insbesondere auch trocken schleifbar. Es erfolgt ein ausreichender Materialabtrag. Ein rasches Zusetzen des Schleifpapiers wird nicht beobachtet.

Nach Belastung im Feucht/Warm-Test treten keine Haftverluste, d.h. keine Enthaftungserscheinungen zum Untergrund auf.

Nach dem Trocknen und Schleifen können die erfindungsgemäßen Überzugsmittel problemlos mit üblichen Decklacken überlackiert werden. Dabei kann es sich um Einschichtdecklacke, z.B. auf 2K-Acrylat/Polyisocyanat-Basis, oder um übliche Basecoat/Clearcoat-Aufbauten handeln. Es kann mit lösemittelbasierenden oder wasserverdünnbaren Überzugsmitteln überlackiert werden.

Die Erfindung soll an den folgenden Beispielen näher erläutert werden.

### Beispiel 1

### Herstellung eines Aminhärters

Es wird ein Aminhärter aus Aminourethanen und hydrophilen Epoxidkomponenten entsprechend DE-A-196 25 345, Tabelle 6.3., Härter W1 eingesetzt.

### Beispiel 2

### Herstellung einer Epoxidkomponente

52,7 Gew.-Teile eines handelsüblichen wäßrigen Epoxidharzes (Beckopox EP 384 w, 53 %ig, OH-Zahl 300 mg KOH/g) werden mit 2,7 Gew.-Teilen eines handelsüblichen Polyisocyanathärters auf Basis von Hexamethylendiisocyanat (HDI) (50 %ig in vollentsalztem (VE) Wasser umgesetzt.

### Beispiel 3

### Herstellung eines Füllers

Es werden 9,3 Gew.-Teile des Aminhärters aus Beispiel 1 mit 68,6 Gew.-Teilen VE-Wasser und 3,1 Gew.-Teilen eines handelsüblichen Verdickers gut miteinander vermischt. Zu der Mischung werden 3,6 Gew.-Teile eines handelsüblichen Entschäumers (50 %ig) und 0,5 Gew.-Teile eines handelsüblichen Korrosionsinhibitors (Inhibitor L1) gegeben und ebenfalls gut homogenisiert.

In dieser Mischung werden folgende Pigmente und Füllstoffe in üblicher Weise dispergiert:
1,2 Gew.-Teile Siliciumdioxid
1,2 Gew.-Teile Eisenoxidgelb
6,6 Gew.-Teile Quarzmehl
23,6 Gew.-Teile Kaolin
28,3 Gew.-Teile Bariumsulfat
26,0 Gew.-Teile Titandioxid
5,4 Gew.-Teile eines Korrosionsschutzpigmentes

Zu der so erhaltenen Polyaminkomponente werden kurz vor der Applikation 55,4 Gew.-Teile der Epoxidkomponente aus Beispiel 2 zugegeben und beide Komponenten intensiv durch Rühren vermischt. Der Füller hat eine Topfzeit von etwa 2,5 Stunden.

### Beispiel 4

### Herstellung eines Vergleichsfüllers

Es wird analog Beispiel 3 verfahren jedoch mit dem Unterschied, daß als Epoxidkomponente 52,7 Gew.-Teile eines handelsüblichen wäßrigen nichtmodifizierten Epoxidharzes (Epoxidharzes (Beckopox EP 384 w, 53 %ig) eingesetzt werden.

### Applikation der Füller

Zur Beurteilung der lacktechnischen Eigenschaften werden die Füller und Vergleichsfüller jeweils auf mit Kataphoresegrundierung vorbeschichtete Stahlsubstrate aufgespritzt und 60 Minuten bei 60°C getrocknet. Die lacktechnischen Ergebnisse sind in der folgenden Tabelle dargestellt.

| Eigenschaft | erfindungsgemäßer Füller | Vergleichsfüller |
|---|---|---|
| Schleifbarkeit/trocken (1) | 2 | 3 - 4 |
| Rasches Untersetzen des Schleifpapiers | nein | ja |
| Blasenbildung (2) nach 1. Spritzgang | keine | 5 |
| Blasenbildung (2) nach Ofentrocknung (45 min, 60°C) | keine | 6 |
| Haftung (3) | | |
| nach 16 h Raumtemperatur | 1 - 2 | 2 |
| nach 16 h bei 60° C | 1 | 2 |
| Haftung (3) nach Feucht/Warm-Test (4) | | |
| nach 1 h | 5 | 5 |
| nach 24 h | 1 - 2 | 2 - 3 |
| nach 7 Tagen | 2 | 2 - 3 |
| Unterwanderung (5) nach Feucht/Warm-Test (4) | 0,1 mm | 0,3 mm |
| Oberflächenqualität | keine Nadelstiche | einige kleine Nadelstiche |

| | | |
|---|---|---|
| (1) Bewertung: 1- sehr gut, 2 - gut, 3 - noch akzeptabel, 4 - mangelhaft, 5 - n.i.O. | | |
| (2) Anzahl der Blasen pro Fläche | | |
| (3) Gitterschnitt in Anlehnung an DIN 53151 | | |
| (4) Feucht/Warm-Test nach DIN 50017 | | |
| (5) Unterwanderung nach DIN 53167 | | |

## Patentansprüche

1. Wäßriges Beschichtungsmittel, enthaltend
A) eine Aminkomponente aus
einem oder mehreren Aminourethanen A1), die erhältlich sind durch Umsetzung von
a) einer oder mehreren Verbindungen mit mindestens einer cyclischen Carbonatgruppe mit
b) einem oder mehreren Aminen mit mindestens einer primären Aminogruppe,
wobei das Verhältnis der Anzahl der cyclischen Carbonatgruppen zu der Anzahl der primären Aminogruppen 1 : 10 bis 1 : 1,1 beträgt, und die gegebenenfalls umgesetzt sein können mit einer oder mehreren hydrophilen wasserverdünnbaren Epoxidverbindungen A2), wobei das Verhältnis der Anzahl aller Aminwasserstoffatome von A1) zu den Epoxidgruppen von A2) 2 : 1 bis 20 : 1 beträgt,
und
B) eine Epoxidkomponente aus einer oder mehreren
urethangruppenhaltigen Epoxidverbindungen, welche erhältlich sind durch Reaktion einer oder mehrerer Epoxidverbindungen c) mit einem oder mehreren Polyisocyanaten d), wobei die Polyisocyanate in einer Menge von 0,1 bis 50 Gew.-%, bezogen auf die Menge der Epoxidverbindung (fest auf fest) eingesetzt werden.

2. Beschichtungsmittel nach Anspruch 1, **dadurch gekennzeichnet, daß** die zur Herstellung der Aminourethane A1) als Komponente a) einsetzbaren cyclischen Carbonatgruppen enthaltenden Verbindungen eine oder mehrere 2-Oxo-1,3-dioxolan- oder 2-Oxo-1,3-dioxan-Gruppen enthalten.

3. Beschichtungsmittel nach Anspruch 1 oder 2, **dadurch gekennzeichnet, daß** die Aminourethane A1) mit hydrophilen nicht-ionischen Epoxidverbindungen A2) umgesetzt sind.

4. Beschichtungsmittel nach einem der Ansprüche 1 bis 3, **dadurch gekennzeichnet, daß** als zur Umsetzung mit den Aminourethanen A1) geeignete hydrophile Epoxidverbindungen A2) Reaktionsprodukte aus
e) einem oder mehreren Polyalkylenpolyethern mit mindestens einer primären und/oder sekundären alpha-ständigen Aminogruppe und mindestens einer omega-ständigen Alkylether- oder Arylethergruppe und/oder einem oder mehreren Polyalkylenpolyethern mit zwei primären und/oder sekundären alpha, omega-ständigen Aminogruppen, jeweils mit einer gewichtsmittleren Molmasse (Mw) von 200 bis 20000
und
f) einer oder mehreren Epoxidverbindungen mit mindestens 2 Epoxidgruppen pro Molekül und einem Epoxidäquivalentgewicht von 100 bis 2000 eingesetzt werden.

5. Beschichtungsmittel nach einem der Ansprüche 1 bis 4, **dadurch gekennzeichnet, daß** die Bindemittelkomponenten A) und B) so gemischt werden, daß das Äquivalentverhältnis der Aminogruppen zu den Epoxidgruppen 5 : 1 bis 1 : 5 beträgt.

6. Beschichtungsmittel nach einem der Ansprüche 1 bis 5, **dadurch gekennzeichnet, daß** es Pigmente, Füllstoffe, organische Lösemittel und/oder lackübliche Additive enthält.

7. Verfahren zur Herstellung von Mehrschichtlackierungen durch Auftrag einer Grundierungs-, einer Füller-, und einer Decklack- oder Basislack/Clearcoat-Schicht, **dadurch gekennzeichnet, daß** zur Erstellung der Grundierungsund/oder Füllerschicht ein Beschichtungsmittel nach einem der Ansprüche 1 bis 6 verwendet wird.

8. Verwendung der Beschichtungsmittel nach einem der Ansprüche 1 bis 6 zur Herstellung von Grundierungs- und/oder Füllerschichten bei der Herstellung von Mehrschichtlackierungen.

9. Verwendung der Beschichtungsmittel nach einem der Ansprüche 1 bis 6 bei der Lackierung von Kraftfahrzeugen.

## Claims

1. Aqueous coating composition comprising
A) an amine component of
one or more amindurethanes A1), which are obtainable by reaction of
a) one or more compounds with at least one cyclic carbonate group with
b) one or more amines with at least one primary amino group
the ratio of the number of cyclic carbonate groups to the number of primary amino groups being 1 : 10 to 1 : 1.1,
and which optionally can be reacted with one or more hydrophilic epoxide compounds A2) which can be diluted with water, the ratio of the number of all the amine hydrogen atoms of A1) to the epoxide groups of A2) being 2 : 1 to 20 : 1,
and
B) an epoxide component of one or more epoxide compounds which contain urethane groups and which are obtainable by reaction of one or more epoxide compounds c) with one or more polyisocyanates d), the polyisocyanates being employed in an amount of 0.1 to 50 wt.%, based on the amount of epoxide compound (solid for solid).

2. Coating composition according to claim 1, **characterized in that** the compouride containing cyclic carbonate groups which can be employed as component a) for the preparation of the aminourethanes A1) contain one or more 2-oxo-1,3-dioxolane or 2-oxo-1,3-dioxane groups.

3. Coating composition according to claim 1 or 2, **characterized in that** the aminourethanes A1) are reacted with hydrophilic non-ionic epoxide compounds A2).

4. Coating composition according to one of claims 1 to 3, **characterized in that** reaction products of
e) one or more polyalkylene polyethers with at least one primary and/or secondary amino group in the alpha position and at least one alkyl ether or aryl ether group in the omega position and/or one or more polyalkylene polyethers with two primary and/or secondary amino groups in the alpha, omega position, in each case with a weight-average molecular weight (Mw) of 200 to 20,000
and
f) one or more epoxide compounds with at least 2 epoxide groups per molecule and an epoxide equivalent weight of 100 to 2,000
are employed as the hydrophilic epoxide compounds A2) which are suitable for reaction with the aminourethanes A1).

5. Coating composition according to one of claims 1 to 4, **characterized in that** the binder components A) and B) are mixed such that the, equivalent ratio of the amino groups to the epoxide groups is 5 : 1 to 1 : 5.

6. Coating composition according to one of claims 1 to 5, **characterized in that** it comprises pigments, fillers, organic solvents and/or additives which are conventional in lacquers.

7. Process for the preparation of multilayer lacquerings by application of a layer of primer, a layer of filler and a layer of top lacquer or base lacquer/clear coat, **characterized in that** a coating composition according to one of claims 1 to 6 is used to establish the primer and/or filler layer.

8. Use of the coating compositions according to one of claims 1 to 6 for the preparation of primer and/or filler layers in the preparation of multilayer lacquerings.

9. Use of the coating compositions according to one of claims 1 to 6 in the lacquering of motor vehicles.

## Revendications

1. Agent de recouvrement aqueux contenant :
A) un composant aminé se composant de :
un ou plusieurs aminouréthanes A1), qui peuvent être obtenus par transformation de :
a) un ou plusieurs composés avec au moins un groupe carbonate cyclique avec
b) une ou plusieurs amines avec au moins un groupe amino primaire,
moyennant quoi le rapport du nombre de groupes carbonate cycliques et du nombre de groupes amino primaires s'élève à 1 :1 à 1 :1,1, et qui peuvent, le cas échéant, être transformés avec un ou plusieurs composés époxyde hydrosolubles hydrophiles A2), le rapport du nombre de tous les atomes d'aminohydrogène de A1) et des groupes époxyde de A2) s'élèvent à 2 : 1 à 20 : 1, et
B) un composant époxyde à partir d'un ou plusieurs composés époxyde contenant des groupes uréthane, lesquels peuvent être obtenus par la réaction d'un ou de plusieurs composés époxyde c) avec un ou plusieurs polyisocyanates d), moyennant quoi le polyisocyanate est introduit dans une quantité de 0,1 à 50 % en poids, en rapport avec la quantité de composé époxyde (dur sur dur).

2. Agent de recouvrement selon la revendication 1, **caractérisé en ce que** les composés contenant des groupes carbonate cycliques pouvant être introduits en tant que composants a) pour la préparation d'aminouréthanes A1) contiennent un ou plusieurs groupes 2-oxo-1,3-dioxolane ou 2-oxo-1,3-dioxane.

3. Agent de recouvrement selon la revendication 1 ou 2, **caractérisé en ce que** les aminouréthanes A1) sont transformés avec des composés époxyde A2) non ioniques hydrophiles.

4. Agent de recouvrement selon l'une des revendications 1 à 3, **caractérisé en ce qu'**on introduit, pour la transformation avec les aminouréthanes A1) des composés époxyde hydrophiles appropriés et A2) des produits réactionnels composés de :
e) un ou plusieurs polyalkyléthers avec au moins un groupe amino primaire et/ou secondaire en position alpha et au moins un groupe alkyléther ou aryléther en position oméga et/ou un ou plusieurs polyalkylpolyéthers avec deux groupes amino primaires et/ou secondaires en position alpha, oméga, chacun ayant une masse molaire moyenne en poids (Mw) de 200 à 20 000 et
f) un ou plusieurs composés époxyde avec au moins 2 groupes époxyde par molécule et un poids équivalent de l'époxy de 100 à 2000.

5. Agent de recouvrement selon l'une des revendications 1 à 4, **caractérisé en ce que** les composants du liant A) et B) sont mélangés de telle sorte que le rapport d'équivalence des groupes amino et des groupes époxyde s'élève de 5 : 1 à 1 : 5.

6. Agent de recouvrement selon l'une des revendications 1 à 5, **caractérisé en ce qu'**il contient des pigments, des matières de charge, des solvants organiques et/ou des additifs habituels pour peinture.

7. Procédé pour la préparation de peinture multicouches par application d'une couche de base, d'une couche de remplissage et d'une couche de peinture superficielle ou de base/clearcoat, **caractérisé en ce que**, pour la préparation da la couche de base et/ou de remplissage, on utilise un agent de recouvrement selon l'une des revendications 1 à 6.

8. Utilisation de l'agent de recouvrement selon l'une des revendications 1 à 6, pour la préparation de couches de base et/ou de remplissage lors de la fabrication de peinture multicouches.

9. Utilisation de l'agent de recouvrement selon l'une des revendications 1 à 6 pour la peinture de véhicules.
